**Europäisches Patentamt**

**European Patent Office**

**Office européen des brevets**

(19)

(11) Veröffentlichungsnummer: **0 237 733**
**B1**

# (12) EUROPÄISCHE PATENTSCHRIFT

(45) Veröffentlichungstag der Patentschrift:
**19.12.90**

(21) Anmeldenummer: **87101038.5**

(22) Anmeldetag: **26.01.87**

(51) Int. Cl.⁵: **H05B 39/08**

(54) Schaltung zur Speisung einer Lampe.

(30) Priorität: **19.02.86 DE 3605278**

(43) Veröffentlichungstag der Anmeldung:
**23.09.87 Patentblatt 87/39**

(45) Bekanntmachung des Hinweises auf die Patenterteilung:
**19.12.90 Patentblatt 90/51**

(84) Benannte Vertragsstaaten:
**AT CH DE FR GB IT LI**

(56) Entgegenhaltungen:
**GB-A- 2 159 009**
**US-A- 4 503 364**

(73) Patentinhaber: **THERA Patent GmbH & Co. KG**
**Gesellschaft für industrielle Schutzrechte, Griesberg 2,**
**D-8031 Seefeld 1(DE)**

(72) Erfinder: **Herold, Wolf-Dietrich, Dr., Höhenweg 13,**
**D-8031 Seefeld 2(DE)**
Erfinder: **Grafwallner, Karl-Ludwig,**
**Kathi-Kobus-Strasse 9/4, D-8000 München 40(DE)**
Erfinder: **Keller, Michael, Riesenheimerstrasse 7,**
**D-8032 Gräfelfing(DE)**

(74) Vertreter: **Strehl, Schübel-Hopf, Groening,**
**Maximilianstrasse 54 Postfach 22 14 55,**
**D-8000 München 22(DE)**

## Beschreibung

Die Erfindung betrifft eine Schaltung zur Speisung einer Lampe, insbesondere eines dentalen Fotopolymerisationsgeräts.

Bekannt sind derartige Bestrahlungsgeräte mit Lampen, insbesondere Halogen-Niedervolt-Lampen, die UV- oder UV-nahes blaues Licht emittieren, das etwa mittels eines Lichtleiters zum Aushärten einer Zahnfüllung auf den Behandlungsort im Mund des Patienten gerichtet wird. Für eine sichere, gleichmäßige Fotopolymerisation kommt es darauf an, daß unabhängig von Schwankungen in der Speisespannung der Lampe eine quantitativ und qualitativ stets gleiche Lichtmenge während jedes, beispielsweise 20 s langen Polymerisationszyklus erzeugt wird.

Durch Verwendung einer Konstantspannungsquelle läßt sich dieses Ziel jedoch nicht erreichen. Bedingt durch Herstellungstoleranzen, insbesondere hinsichtlich der Geometrie der Wolframwendel, können Lampen trotz gleicher Nennleistungsdaten relativ große Abweichungen in der elektrischen Leistungsaufnahme, gemessen bei konstanter Spannung, aufweisen. Nach Angaben der Hersteller betragen die Abweichungen bis zu 12%. In Anbetracht der Tatsache, daß bereits geringe Veränderungen in der elektrischen Leistung relativ große Schwankungen in der UV- und UV-nahen Strahlungsemission der Lampe bewirken, kann es bereits beim Austausch einer Lampe zu einer unerwünscht großen Veränderung des Lichtstromes kommen. Wie in der deutschen Offenlegungsschrift 2 607 249 dargelegt, bewirken bereits Änderungen der Lampenspannung von ± 5% Schwankungen in der UV-Emission von ± 20%.

Ferner tritt an der Wolframwendel einer Halogenlampe im Lauf der Zeit ein Abbrand auf, der den elektrischen Widerstand der Wendel allmählich ansteigen läßt. Bei Speisung der Lampe aus einer Konstantspannungsquelle werden daher der Strom, somit die elektrische Leistung und infolgedessen auch die Lichtleistung absinken.

Versucht man, über eine Konstantstromversorgung der Lampe den Spannungsschwankungen und den daraus resultierenden Lichtschwankungen zu begegnen, so führt auch dies nicht zum Ziel. Wiederum können beim Lampenwechsel beträchtliche Unterschiede in der Lichtleistung auftreten. Ferner wird beim Anstieg des elektrischen Widerstandes der Wendel infolge Abbrand bei Speisung mit konstantem Strom in diesem Fall die Spannung nachgeführt, so daß nun die elektrische Leistung und überproportional auch der Lichtstrom zunehmen, wodurch die Lebensdauer der Lampe drastisch verkürzt wird.

In der deutschen Offenlegungsschrift 3 411 994 findet sich ein Vorschlag, eine konstante Lichtleistung dadurch zu erreichen, daß zu der eigentlichen Bestrahlungslampe eine zweite Lampe als Referenzlichtquelle parallel geschaltet wird, die einen Fotodetektor beleuchtet, dessen Ausgangssignal als Regelgröße zum Nachstellen der Lampenspannung benutzt wird. Diese Regelung ist grundsätzlich mit dem Mangel behaftet, daß die beiden Lampen unterschiedliche Eigenschaften, wie Abhängigkeit der Lichtleistung von der Lampenspannung, Alterung usw. aufweisen können, so daß auch bei gleicher Lichtleistung der Referenzlampe die Lichtleistung der Bestrahlungslampe variieren kann. Weiterhin ist die bekannte Schaltung nicht in der Lage, die unterschiedliche elektrische Leistung und damit die unterschiedliche Lichtleistung einer neuen Lampe zu erkennen oder ein Absinken des Lampenstroms und damit des Lichtstroms der Bestrahlungslampe infolge Wendelabbrands auszuregeln. Auch die infolge Alterung sich allmählich ändernden Eigenschaften des Fotodetektors werden die Regelung verfälschen. Um schließlich Einflüsse aus dem Temperaturgang von Referenzlampe und Detektor zu vermeiden, ist es erforderlich, diese Bauelemente zusammen mit einem temperaturkompensierenden Widerstand in einem thermisch abgeschlossenen Bereich unterzubringen, wodurch das Bestrahlungsgerät aufwendig wird.

Die folgenden Überlegungen gehen davon aus, daß die von der Lampe abgegebene Lichtleistung unabhängig von Schwankungen der Speisespannung und Änderungen des Wendelwiderstands, etwa infolge Abbrands, praktisch konstant bleibt, sofern die zugeführte elektrische Leistung konstant gehalten wird. Dies läßt sich anhand der Leistungsbilanz für Halogen-Glühlampen erläutern:

$$P_{el} = \Lambda \cdot T + \sigma \cdot T^4 \cdot A$$

wobei

$P_{el} \triangleq$ zugeführte elektrische Leistung
$\Lambda \cdot T \triangleq$ abgeführte Leistung durch Wärmeleitung
$\sigma \cdot T^4 \cdot A \triangleq$ abgeführte Leistung durch Strahlung
$\Lambda \triangleq$ Wärmeleitfähigkeit
$T \triangleq$ absolute Temperatur
$\sigma \triangleq$ Stefan-Boltzmann-Konstante
$A \triangleq$ strahlende Wendeloberfläche

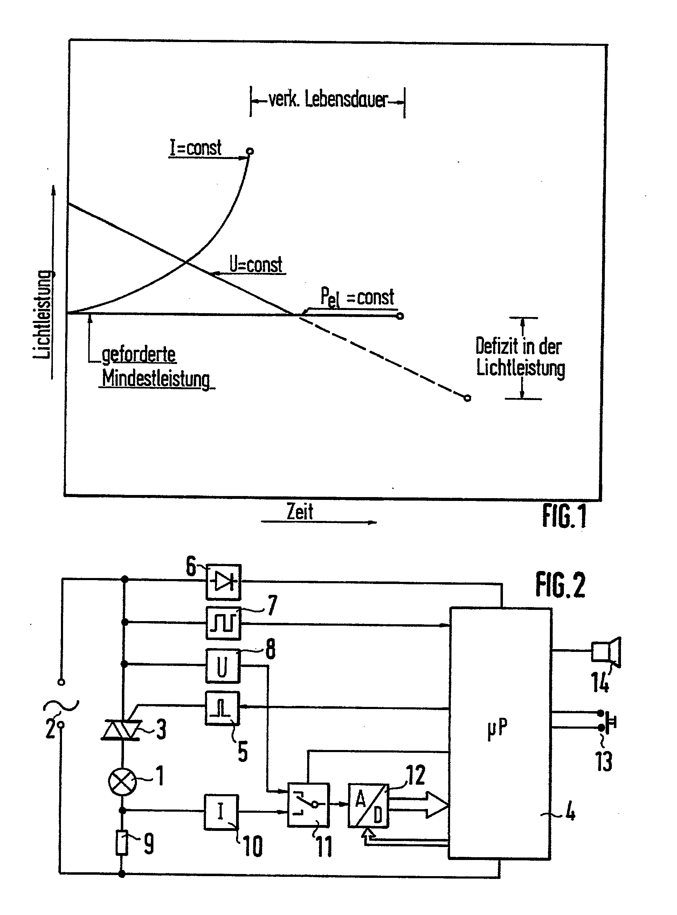

Betrachtet man anhand der obigen Gleichung den Fall der konstanten Spannung, so erkennt man, daß bei Abbrand der Wolframwendel aufgrund der konstanten Spannung die Stromdichte und damit die Temperatur T des Wendelmaterials gleich bleibt. Die Lichtleistung $\sigma \cdot T^4 \cdot A$ ist somit direkt abhängig von der Wendeloberfläche A. Proportional zur Abnahme der elektrischen Leistung $P_{el}$ wird auch die Lichtleistung abnehmen, wie dies in Figur 1 anhand der Kurve U = const dargestellt ist.

Ferner ist ersichtlich, daß sich bei neuen Lampen gleicher Nennleistung unterschiedliche Lichtleistungen in direkter Abhängigkeit vom Wendeldurchmesser bzw. Wendelwiderstand ergeben werden. Wie oben erwähnt, betragen zulässige Abweichungen der Leistungsaufnahme laut Herstellerangaben bei neuen Lampen bis zu 12%; zusätzlich ergeben sich ein elektrischer Leistungsabfall und damit verbunden ein Lichtleistungsabfall über die Lebensdauer von etwa 20%.

Betrachtet man dagegen die obige Gleichung für den Fall des konstanten Stroms, so erhöht sich bei Abbrand der Wendel die Stromdichte und damit die Temperatur T. Zwar nimmt die strahlende Wendeloberfläche A ab; da jedoch die Temperatur T in der vierten Potenz steht, wird dieser Verlust überkompensiert. Damit steigt die Lichtleistung $\sigma \cdot T^4 \cdot A$ überproportional an, und die Lebensdauer der Wendel sinkt rapide (vgl. die Kurve I = const in Figur 1).

Bei Konstantstrombetrieb gilt die Kurve I = const in Figur 1 auch für neue Lampen, die damit sehr unterschiedliche Lichtleistungen erzeugen werden.

Betrachtet man nun die obige Gleichung unter dem Aspekt der konstanten elektrischen Leistung $P_{el}$, so sieht man, daß eine durch Abbrand bewirkte Verringerung der Wendeloberfläche A nur eine äußerst geringe Änderung der Temperatur T (nämlich im Maße der vierten Wurzel) bewirkt, so daß die durch Wärme abgeführte Leistung $\Lambda \cdot T$ sich ebenfalls nur äußerst geringfügig ändert und daher die Lichtleistung $\sigma \cdot T^4 \cdot A$ als fast konstant angesehen werden kann. Damit wird über die Lebensdauer der Lampe eine annähernd konstante Lichtleistung abgegeben werden, wie dies in der Kurve $P_{el}$ = const in Figur 1 dargestellt ist.

Aus Figur 1 wird weiterhin deutlich, daß bei einer geforderten Mindest-Lichtleistung $\sigma \cdot T^4 \cdot A$ eine mit konstanter elektrischer Leistung $P_{el}$ betriebene Lampe die längste Lebensdauer haben wird, was ein wichtiger Aspekt für einen wirtschaftlichen Betrieb ist.

Bei der Regelung der elektrischen Leistung einer Lampe nach dem Stand der Technik wird gelegentlich mit einer Gleichspannungsversorgung der Lampe gearbeitet, wobei der Lampenstrom und die Spannung in Beziehung gesetzt werden und die Regelung so erfolgt, daß die von der Versorgungsquelle zur Verfügung gestellte überschüssige Leistung in Wärme umgesetzt wird. Dies bedeutet neben einer unerwünschten Temperaturerhöhung des Regelgeräts einen sehr schlechten Wirkungsgrad. Wird dagegen mit einer Wechselspannungsversorgung der Lampe gearbeitet, so läßt sich zwar mittels Phasenanschnittsteuerung eine nahezu verlustlose Regelung realisieren. In diesem Fall liegen jedoch die Istwerte von Lampenstrom und Spannung als nicht-sinusförmige Signale vor und werden daher zur weiteren Verarbeitung regelmäßig in Gleichspannungswerte umgeformt, die in ihrer Höhe den Effektivwerten von Lampenstrom und Spannung entsprechen. Dies bedeutet einen erheblichen schaltungstechnischen Aufwand und wegen der erforderlichen Kapazitäten eine entsprechend träge Regelung.

Aus US-A 4 503 364 ist ferner eine Schaltung zur Speisung einer Lampe aus einer Wechselspannungsquelle gemäß dem ersten Teil des Patentanspruchs 1 bekannt. Bei der Lampe handelt es sich dort insbesondere um eine Gasentladungslampe hoher Intensität mit gesteuertem Vorschaltgerät. Zur Konstanthaltung der elektrischen Leistung der Lampe werden dabei Lampenstrom und Lampenspannung erfaßt in einem Wattmeter zur Bildung eines elektrischen Signals multipliziert, das mit einem Bezugssignal verglichen wird. Das aus dem Vergleich resultierende Fehlersignal wird integriert und unter Verwendung eines Sägezahnsignals in eine Folge von Impulsen umgesetzt, mit denen das Vorschaltgerät gesteuert wird. Die bekannte Schaltung ist aufgrund der Verwendung eines Wattmeters, eines Sägezahngenerators und zweier Vergleichsstufen aufwendig. Die zur Integration des Fehlersignals und zur Erzeugung des Sägezahnsignals benötigten Kapazitäten begrenzen die Ansprechgeschwindigkeit der Schaltung.

Der Erfindung liegt die Aufgabe zugrunde, eine Schaltung zur Speisung einer Lampe, insbesondere eines dentalen Fotopolymerisationsgerätes anzugeben, die es gestattet, eine konstante elektrische Leistung bei minimalen Verlusten, geringem schaltungstechnischem Aufwand und hoher Ansprechgeschwindigkeit zur Verfügung zu stellen.

Die erfindungsgemäße Lösung dieser Aufgabe ist im Patentanspruch 1 gekennzeichnet Die erfindungsgemäße Schaltung kommt ohne Gleichrichtung aus und arbeitet unmittelbar mit Momentanwerten, vorzugsweise den Spitzenwerten, der Lampenstrom- und Lampenspannungsgrößen. Diese Spitzenwerte sind nämlich unter der Voraussetzung, daß die speisende Wechselspannung weitgehend sinusförmigen Verlauf aufweist, ein Maß für die Effektivwerte von Lampenstrom und Lampenspannung. Daraus folgt, daß abhängig von diesen momentanen Werten jeweils ein bestimmter Phasenanschnittwinkel nötig ist, um einen gleichbleibenden Effektivwert, d.h. konstante Leistung, zu erhalten. Diese Abhängigkeit ist im Festspeicher eines Mikroprozessors tabellarisch für jeweils unterschiedliche Momentanwerte von Lampenstrom und Lampenspannung abgespeichert. In jeder Periode der speisenden Wechselspannung werden dabei der Spitzenwert des Lampenstroms und der Spitzenwert der Lampenspannung gemessen und für die Kombination dieser beiden Werte ein entsprechender Signalwert aus dem Speicher gelesen, der zur Steuerung des Phasenanschnittwinkels für die nächste Periode herangezogen wird.

Die in Rede stehende Schaltung läßt sich nicht nur im Dentalbereich sondern auch zur Steuerung von Lampen für die Polymerisation im allgemeinen technischen Bereich, ferner auch in Verbindung mit Farbmeßgeräten, Dia- und Filmprojektoren und Kopiergeräten sowie generell überall dort einsetzen, wo eine konstante elektrische Leistung gefordert wird.

Die Weiterbildung nach Anspruch 6 dient dazu, Extremwerte von Lampenstrom und/oder Lampenspannung, die bei zu hoher oder zu niedriger Versorgungsspannung, bei Kurzschluß oder bei Leerlauf (defekter Lampe) auftreten, zu erkennen und eine Abschaltung des Gerätes zu bewirken.

Zur Schonung der Lampe dient der mit der Weiterbildung nach Anspruch 7 erreichte sogenannte "Softstart", der beim Einschalten die Lampenspannung langsam ansteigen läßt; dadurch wird der Einschalt-Stromstoß vermieden, der sonst durch den extrem kleinen Widerstand der kalten Wendel verursacht würde.

Ein Ausführungsbeispiel der Erfindung wird nachstehend anhand der Figur 2 der Zeichnung beschrieben, die ein Blockschaltbild einer Schaltung zur Speisung einer Lampe mit konstanter elektrischer Leistung veranschaulicht.

Gemäß Figur 2 wird eine Lampe 1 von einer Wechselspannungsquelle 2 gespeist. Zur Regelung der der Lampe 1 zugeführten elektrischen Leistung auf konstanten Wert dient ein in den Speisekreis eingeschalteter Triac 3, dessen Gate-Elektrode von einem Mikroprozessor 4 über einen Zündkreis 5 mit einem Steuersignal beaufschlagt wird. Der Mikroprozessor 4 erhält seine Stromversorgung über einen Gleichrichter 6 von der Wechselspannungsquelle 2 und wird über eine Synchronisierstufe 7 auf deren Frequenz synchronisiert. Die Lampenspannung wird über einen Meßkreis 8 ermittelt, der Lampenstrom als an einem Shunt auftretender Spannungsabfall über einen Meßkreis 1O abgegriffen. Die Ausgangssignale der beiden Meßkreise 8 und 1O liegen an zwei Eingängen eines elektronischen Umschalters 11, dessen Ausgangssignal über einen Analog/Digital-Umsetzer 12 dem Mikroprozessor 4 zugeführt wird. Der Umschalter 11 wird vom Mikroprozessor 4 synchron mit der Frequenz der Wechselspannungsquelle 2 angesteuert, so daß in jeder Periode die Meßwerte für Lampenstrom und Lampenspannung an den A/D-Umsetzer 12 gelangen, der seinerseits vom Mikroprozessor 4 derart gesteuert wird, daß er die Umsetzung des jeweiligen Meßwerts zu dem Zeitpunkt durchführt, zu dem dieser seine größte Amplitude aufweist. Aus den beiden dem Mikroprozessor in digitaler Form zugeführten Meßwerten von Lampenstrom und Lampenspannung bildet der Mikroprozessor 4 einen Signalwert zur Steuerung des Phasenanschnittwinkels.

Bei Drücken eines Starttasters 13 wird ein Softstart eingeleitet, wobei der Prozessor 4 dafür sorgt, daß sich der Zündimpuls für den Triac 3 kontinuierlich von 18o° in Richtung O° verschiebt. Während des Softstarts erfolgt eine stetige Überwachung des Lampenstroms, so daß bei einem Kurzschluß in der Lampe der Softstart unterbrochen und über einen Signalgeber 14 ein Störsignal ausgegeben wird.

Tritt während des Softstarts keine Störung auf, so geht der Betrieb in eine Regelung auf konstante Leistung über. Nach Ablauf der vorgegebenen Bestrahlungszeit schaltet der Mikroprozessor 4 die dem Zündkreis 5 zugeführten Impulse ab und führt dem Signalgeber 14 nun ein in seiner Frequenz vom Störsignal deutlich verschiedenes Endsignal zu.

Da der Lampenstrom und die Lampenspannung in jeder Periode der speisenden Wechselspannung gemessen und zur Steuerung des Triacs herangezogen werden, ist eine schnelle Regelung gewährleistet. Extremwerte des Lampenstroms und der Lampenspannung, wie sie etwa durch Schwankungen in der Wechselspannungsquelle 2, durch eine falsche Lampe oder sonstige Unregelmäßigkeiten hervorgerufen werden, erkennt der Mikroprozessor 4; auch in diesem Fall schaltet er die dem Zündkreis 5 zugeführten Steuerimpulse ab und gibt auf den Signalgeber 14 ein Störsignal.

## Patentansprüche

1. Schaltung zur Speisung einer Lampe (1) aus einer Wechselspannungsquelle (2) mit einer im Speisekreis der Lampe (1) angeordneten Regelstufe (3...12) zur Konstanthaltung der der Lampe (1) zugeführten elektrischen Leistung, die eine Einrichtung (8) zur kontinuierlichen Messung der Lampenspannung, eine Einrichtung (10) zur kontinuierlichen Messung des Lampenstroms und einen mit den Ausgangssignalen der beiden Meßeinrichtungen (8, 10) beaufschlagten Schaltkreis (11, 12) enthält, dadurch gekennzeichnet,
daß die Regelstufe (3...12) einen Speicher aufweist, in dem zu Paaren von unterschiedlichen Werten des Lampenstroms und unterschiedlichen Werten der Lampenspannung jeweils vorgegebene Signalwerte gespeichert sind,
daß der Schaltkreis (11, 12) mit der speisenden Wechselspannung synchronisiert ist und die Ausgangssignale der beiden Meßeinrichtungen (8, 10) zu vorgegebenen Momenten abgreift und einer Adressiersteuerung des Speichers zuführt, und
daß ein mit den Signalwerten aus dem Speicher gesteuertes Schaltelement (3) den Lampenstrom in zur speisenden Wechselspannung synchronen Intervallen jeweils für eine von Lampenstrom und Lampenspannung abhängige Zeitspanne schaltet

2. Schaltung nach Anspruch 1, dadurch gekennzeichnet, daß das Schaltelement ein Triac (3) ist, dessen Gate-Elektrode mit dem aus dem Speicher entnommenen Signalwert steuerbar ist.

3. Schaltung nach Anspruch 1 oder 2, dadurch gekennzeichnet, daß der Schaltkreis (11, 12) derart gesteuert ist, daß er jeweils die Spitzenwerte der Ausgangssignale der beiden Meßeinrichtungen (8, 10) in jeder Periode der speisenden Wechselspannung abgreift.

4. Schaltung nach einem der Ansprüche 1 bis 3, dadurch gekennzeichnet, daß der Schaltkreis (11, 12) einen mit der speisenden Wechselspannung synchronisierten elektronischen Umschalter (11), dessen Eingänge an die beiden Meßeinrichtungen (8, 10) angeschlossen sind, und einen an den Ausgang des Umschalters (11) angeschlossenen, synchron zur speisenden Wechselspannung angesteuerten Analog/Digital-Umsetzer (12) aufweist.

5. Schaltung nach Anspruch 4, dadurch gekennzeichnet, daß die Steuerung des Schaltelements (3), des Umschalters (11) und des Analog/Digital-Umsetzers (12) sowie die Adressiersteuerung des Speichers über einen mit der speisenden Wechselspannung synchronisierten Mikroprozessor (4) erfolgt.

6. Schaltung nach einem der Ansprüche 1 bis 5, gekennzeichnet durch eine Einrichtung, die bei Über- bzw. Unterschreiten vorgegebener Grenzwerte von Lampenstrom und/oder Lampenspannung die Lampe (1) abschaltet.

7. Schaltung nach einem der Ansprüche 1 bis 6, gekennzeichnet durch eine Einrichtung, die beim Einschalten der Lampe (1) den Anstieg der Lampenspannung verlangsamt.

## Claims

1. A circuit for feeding a lamp (1) from an a.c. source (2), including a control stage (3...12) disposed in the feeding circuit of the lamp (1) for keeping the electric power applied to the lamp (1) constant, means (8) for continuously measuring the lamp voltage, means (10) for continuously measuring the lamp current, and a circuit (11, 12) supplied with the output signals of the two measuring means (8, 10), characterized in that the control stage (3...12) includes a memory storing predetermined signal values for each pair of different lamp current and voltage values, that the circuit (11, 12) is synchronized with the a.c. supply voltage, samples the output signals of the two measuring means (8, 10) at predetermined moments, and applies them to an address control of the memory, and that a switching element (3) controlled by the signal values from the memory switches the lamp current in intervals, which are synchronous with the a.c. supply voltage, each interval having a period dependent on the lamp current and voltage.

2. The circuit of claim 1, characterized in that the switching element is a triac (3) the gate electrode of which is adapted to be controlled by the signal value taken from the memory.

3. The circuit of claim 1 or 2, characterized in that the switching circuit (11, 12) is controlled so as to sample the respective peak values of the output signals of the two measuring means (8, 10) in each period of the a.c. supply voltage.

4. The circuit of any one of claims 1 to 3, characterized in that the switching circuit (11, 12) comprises an electronic change-over switch (11) synchronized with the a.c. supply voltage and having its inputs connected to the two measuring means (8, 10), and an analog-digital converter (12) connected to the output of the change-over switch (11) and controlled in synchronism with the a.c. supply voltage.

5. The circuit of claim 4, characterized in that the control of the switching element (3), the change-over switch (11) and the analog-digital converter (12), and the address control of the memory, are performed by means of a microprocessor (4) which is synchronized with the a.c. supply voltage.

6. The circuit of any one of claims 1 to 5, characterized by means for turning-off the lamp (1) when the lamp current and/or voltage rise above or fall below predetermined limit values.

7. The circuit of any one of claims 1 to 6, characterized by means for decreasing the rate of lamp voltage rise upon turning-on of the lamp (1).

**Revendications**

1. - Circuit pour l'alimentation d'une lampe (1) à partir d'une source de tension alternative (2), comprenant un étage de régulation (3...12) disposé dans le circuit d'alimentation de la lampe (1) et servant à la stabilisation de la puissance électrique amenée à la lampe (1), lequel étage de régulation comprend un dispositif (8) pour la mesure en continu de la tension de lampe, un dispositif (10) pour la mesure en continu du courant de lampe et un circuit de commutation (11, 12) recevant les signaux de sortie des deux dispositifs de mesure (8, 10), caractérisé en ce que l'étage de régulation (3...12) comporte une mémoire dans laquelle sont stockées des valeurs de signaux respectivement prédéterminées pour des paires de valeurs variables du courant de lampe et de valeurs variables de la tension de lampe; que le circuit de commutation (11, 12) est synchronisé avec la tension alternative d'alimentation et prélève les signaux de sortie des deux dispositifs de mesure (8, 10) à des instants prédéterminés et les transmet à une commande d'adressage de la mémoire; et qu'un élément de commutation (3) commandé par les valeurs de signaux provenant de la mémoire commute le courant de lampe à des intervalles synchrones avec la tension alternative d'alimentation, pour un intervalle de temps qui dépend respectivement du courant de lampe et de la tension de lampe.

2. - Circuit selon la revendication 1, caractérisé en ce que l'élément de commutation est un triac (3) dont la grille peut être commandée par la valeur de signal issue de la mémoire.

3. - Circuit selon l'une des revendications 1 ou 2, caractérisé en ce que le circuit de commutation (11, 12) est commandé de telle façon qu'il prélève respectivement les valeurs de crête des signaux de sortie des deux dispositifs de mesure (8, 10) dans chaque période de la tension alternative d'alimentation.

4. - Circuit selon l'une des revendications 1 à 3, caractérisé en ce que le circuit de commutation (11, 12) comprend un commutateur électronique (11) synchronisé avec la tension alternative d'alimentation, dont les entrées sont reliées aux deux dispositifs de mesure (8, 10), et un convertisseur analogique-numérique (12) relié à la sortie du commutateur (11) et commandé en synchronisme avec la tension alternative d'alimentation.

5. - Circuit selon la revendication 4, caractérisé en ce que la commande de l'élément de commutation (3), du commutateur (11) et du convertisseur analogique-numérique (12) ainsi que la commande d'adressage de la mémoire se font par l'intermédiaire d'un microprocesseur (4) synchronisé avec la tension alternative d'alimentation.

6. - Circuit selon l'une des revendications 1 à 5, caractérisé en ce qu'il comprend un dispositif qui déconnecte la lampe (1) lors d'un dépassement vers le haut et respectivement vers le bas des valeurs limites prédéterminées du courant de lampe et/ou de la tension de lampe.

7. - Circuit selon l'une des revendications 1 à 6, caractérisé en ce qu'il comprend un dispositif qui ralentit la montée de la tension de lampe lors de la mise en circuit de la lampe (1).

FIG.1

FIG.2